# EUROPEAN PATENT SPECIFICATION

(11) **EP 1 702 503 B1**
(45) Date of publication and mention of the grant of the patent: **27.02.2008**
(21) Application number: 06005151.3
(22) Date of filing: 14.03.2006
(51) Int. Cl.: A01C 23/00

(54) **Liquid manure distributor and method for controlling spreading width with a liquid manure distributor**
Gülleausbringvorrichtung sowie Verfahren zum Einstellen der Streubreit einer Gülleausbringvorrichtung
Distributeur de purin et procédé de régler la largeur de dissemination d'un distributeur de purin

(30) Priority: 17.03.2005 DK 200500380
(43) Date of publication of application: 20.09.2006
(73) Proprietor: Samson Agro A/S, 8800 Viborg (DK)
(72) Inventor: Haslund-Thomsen, Chresten Ole, 9200 Aalborg SV (DK)
(74) Representative: Nielsen, Leif

(56) References cited:
- DE-U1- 29 715 481
- US-A- 2 950 737
- US-A- 3 207 389
- US-A- 3 799 080
- US-A1- 2004 025 947

## Description

The present invention concerns a liquid manure distributor for a liquid manure distributing boom, including a chamber with at least one sidewall with holes for discharging liquid manure from the chamber, a number of valves where each valve is provided with one or more discharge openings, where each discharge opening communicates with a distributing hose on the liquid manure distributing boom and with one or more inlet openings, each inlet opening communicating with corresponding holes in the sidewall, and a valve body displaceable between an active position where the inlet and outlet openings have been brought into mutual communication and an inactive position where the communication between the inlet and outlet openings is blocked.

The invention also concerns a method for controlling spreading width of a liquid manure distributing boom, including distributing liquid manure via a liquid manure distributor which includes a chamber with at least one sidewall with holes for discharging liquid manure from the chamber, a number of valves that each are provided with one or more discharge openings, where each discharge opening communicate with a distributing hose on the liquid manure distributing boom and with one or more inlet openings, each inlet opening communicating with corresponding holes in the sidewall, and a valve body displaceable between an active position where the inlet and outlet openings are brought into mutual communication and an inactive position, where the communication between the inlet and outlet openings is blocked.

In the present application, the term liquid manure distributor is used. By this is not only meant distributors for liquid manure, but also a distributor for any kind of organic or artificial fluid fertilisers on the fields. It may e.g. be sludge from sewage treatment plants, residual products from potato flour factories, residual products from the chemical industry, and residual products from the food industry.

### Description of Prior Art

When distributing liquid manure on a field it is usually desired to provide an even distribution of the liquid manure in order to attain as great as possible yield of the crops of the field. The problem is that fields rarely have parallel sides, and there are thus areas on a field which will be fertilised excessively. Since excessive fertilisation does not necessarily entail greater yield, some of the liquid manure will thus be wasted. Furthermore, the excessive fertilisation will have environmental consequences, such as increased run-off of nitrogen, phosphorous, nitrates, sulphur and other nutritional salts into the groundwater, or run-off to lakes and streams if the field is located close to a lake or a stream.

It is thus desirable to provide a liquid manure distributor where it is possible concurrently to adapt the distribution width of the area to be spread with liquid manure, so that provision can be made for the individual characteristics of the field.

A method for adapting the distribution width is to manually cover one or more distribution hoses. However, this has appeared to be tedious, because the driver of the manure spreader, which is usually towed after a tractor, is required to stop the tractor, leave the cab and go to the manure spreader and manually shut off one or more distribution hoses as the section of the field spread on becomes narrower. This extra work load often entails that fields are excessively fertilised because the relevant hoses are not shut off. It is thus desirable to indicate a liquid manure distributor which may be controlled from the cab of the tractor.

In DK utility model BR 2003 00151 there is disclosed a liquid manure distributor described by way of introduction and which is equipped with a number of remote controlled shutters which by activation can open and close, respectively, the supply of liquid manure to a number of distribution hoses so that the spreading width may be adapted to the existing field conditions.

The liquid manure distributor described in BR 2003 00151 is, however, rather complicated, since it uses one directing valve and one hydraulic cylinder for controlling the individual shutter. In a liquid manure distributor with e.g. 12 shutters, there are to be provided 12 hydraulic cylinders and 12 valves, causing the liquid manure distributor to consist of many movable parts, resulting in complicated assembling and thus expensive production and maintenance.

### Description of the Invention

Consequently, it is the purpose of the invention to indicate a liquid manure distributor which is simple, compact, and where the distribution width, i.e. the width of the area upon which liquid manure is spread, can be adjusted concurrently while driving on the field.

This is achieved with a liquid manure distributor as specified in the introduction, which is peculiar in that each valve has a cam means interacting with a cam guide on a guide disc which is rotatable in relation to the valves, and which is activated by an actuator that may rotate the guide disc in an optional direction, so that the valve body may be displaced between the active position and the inactive position by the action of the cam guide on the cam means.

The method according to the invention is peculiar in that one or more steps, where the valve bodies are displaced between the inactive and the active positions by rotating a cam disc with a cam guide interacting with a cam means on the valves, so that the displacement between the active and the inactive positions of the valve body is achieved by the cam guide acting on the cam means.

By rotating the cam disc in relation to the valves, the cam means of the valves may engage the cam guide on the guide disc. The cam means will then interact with the valve body in such a way that it is displaced between the active position where the inlet and outlet openings are in mutual communication, and the inactive position where the communication between the inlet and outlet openings is blocked.

The distributing hoses provided on the liquid manure distributing boom will be connected to the discharge opening of the valves in such a way that by rotation of the control disc in one or the other direction may shut off the liquid manure in the outermost hose at one or the other end of the liquid manure distributing boom. By further rotation of the cam disc so that the cam guide of the guide disc successively engages the cam means of a number of valves, it becomes possible to shut off liquid manure to the liquid manure distributing hoses successively at one or the other outer end of the liquid manure distributing boom so that the spreading width is adjusted concurrently while driving on the field. Hereby is achieved that problems with excessive fertilisation are avoided, as the spreading width may be adjusted according to the field conditions.

In case of long liquid manure distributing booms, there will preferably be applied a liquid manure distributor with a chamber having two sidewalls with holes for discharging liquid manure from the chamber, and a number of valves at each of these sidewalls, which in turn are provided with one or more discharge openings, which in turn communicate with a distributing hose on the liquid manure distributing boom and with one or more inlet openings, each communicating with corresponding holes in the sidewalls.

With a liquid manure distributor according to the invention, one may also close off or open the valves from the centre of the liquid manure distributing boom and outwards against one or the other or both of the outer ends of the liquid manure distributing boom. Besides, a very compact design is achieved, as a simple mechanical construction is used for transferring force to the valve pistons in order to displace these between the active and the inactive positions, where the transmission of force may be provided by using a single actuator which may rotate the control disc in an optional direction. By using this simple control mechanism for controlling the valves, a liquid manure distributor is used which by its simple construction is cheap and easy to make and maintain.

On very wide booms there are great differences to the hose lengths which the liquid manure has to travel through before flowing out on the soil. This causes that if liquid manure is conducted out into all hoses at the same time, liquid manure will flow out of the shorter hoses some time before liquid manure flows out of the longer hoses. If starting the driving is postponed until liquid manure comes out of all hoses, this will cause overdosing in the area with the short hoses. On the other side, if the driving is started as soon as liquid manure comes out of the short hoses, this will entail underdosing in the area with the longer hoses.

With a liquid manure distributor according to the invention, the problem is solved by initially closing the supply to all hoses. When initiating the dosing, firstly there is opened for liquid manure to the longest hoses, and thereafter to the shorter hoses, and finally to the shortest hoses. By adapting the opening speed in relation to supplied liquid manure, it may be attained that liquid manure starts flowing out of all hoses at the same time. Thus, there will not occur any over- or underdosing at the start of the dosing/distributing operation.

Correspondingly, when stopping distribution and dosing, the risk of over- or underdosing is avoided, since by adjusting the closing rate relatively to the supplied liquid manure it is achieved that the liquid manure stops flowing out of all hoses simultaneously.

It is a further advantage by the liquid manure distributor according to the invention, that all valves can be set to be closed by computer control when liquid manure is not closed and distributed. This provides that the residual liquid manure in the spreading system up to the distributor is prevented from running out during transport on the road. This would otherwise happen, e.g. in connection with braking where the liquid manure splashes out into the hoses and thereby down upon the roadway. This may entail a risk of slippery roadways and constitute a hazard and a source of contamination for other road-users.

The liquid manure distributor may in one embodiment be peculiar in that the actuator includes a hydraulic motor driving a gear wheel engaging a toothed rim on the guide disc so that by actuating the gear wheel this may rotate the guide disc in an optional direction.

By designing the actuator as a gear wheel, the teeth of which engaging a toothed rim on the guide disc, there is achieved a simple transmission of force from the hydraulic motor to the control disc, which is equipped with a cam guide that may interact with a corresponding cam on the individual valves, so that by rotating the gear wheel, the guide disc is rotated, whereby the valve bodies are acted on in such a way that they are displaced to or from the active or the inactive positions, respectively. In another embodiment, the actuator may be a hydraulic piston.

In a preferred embodiment, the valves may include a housing of polyethylene with hose connections provided at the discharge openings of the valves. Hereby is achieved a valve where the valve body may be displaced between the active and the inactive position without using large forces, as polyethylene has a very low coefficient of friction. Due to the good frictional properties of the polyethylene, it is thus possible to reduce the motor power required for the actuator to rotate the guide disc. Similar good frictional properties are also utilised between the guide disc and a side disc substantially constituting the sidewall in the liquid manure distributor.

By using stable plastic materials in the construction, a strong and corrosion-resistant construction is achieved. Also, a low-cost liquid manure distributor is achieved, as rapid machining may be performed. Furthermore, there may be achieved a construction with reduced weight, and as such an example the embodiment of the distributor shown in the drawing below will have a weight about 155 kg less than a corresponding construction made of steel. The weight is an important parameter in order to reduce soil compaction.

By providing hose connections on the liquid manure distributor in connection with the discharge openings of the valves, there is achieved a simple construction making mounting and replacement of the distributor hoses simple.

According to a particular embodiment, the liquid manure distributor is peculiar in that the cam means of the valves have an abutment adapted for engaging a hole in the valve body in an active position of the cam means, where the cam means under the action of the cam guide may cause the valve body to be displaced between the active and the inactive positions, and an inactive position of the cam means with the abutment without engaging the hole, and where the cam means under the action of the cam guide does not cause displacement of the valve body.

Hereby is achieved that one or more valves can be shut off by setting the cam means of one or more valves so that it or they are in an inactive position, i.e. a position where action from the cam guide on the cam means does not cause a displacement of the valve body, as there is no engagement between the abutment on the cam guide and the hole in the valve body. This is often a great advantage if it is desired to fix a certain spreading width, which will often be the case when there are existing wheel tracks in the field, possibly made in connection with other field work, such as spraying of crops. A sprayer will typically have a span of 16 m. Therefore, one may fertilise a section of the soil excessively, if e.g. one is using a liquid manure spreader with a liquid manure distributing boom spanning e.g. 20 m, as there will be an overlap between two spreading lanes. However, if using a liquid manure distributor according to the invention with a number of valves as described above, then it is possible to fix the spreading width to e.g. 16 m by covering or shutting off one or more of the valves. Typically, a valve will have three discharge openings communicating with three distributing hoses covering a length of substantially one metre of the liquid manure distributing boom. Therefore, it will be sufficient to cover the four valves conducting liquid manure to the two outer ends of the liquid manure distributing boom. In another embodiment, a liquid manure distributor according to the invention may have valves with fewer or more discharge openings than three, such as e.g. two, four, five or more discharge openings.

In an embodiment, each valve housing may include more valve bodies. Hereby is achieved a compact unit that possibly may include a common lubricating point for lubricating the valve bodies. This will contribute to facilitating maintenance of the liquid manure distributor and thereby also contribute to reducing damage resulting from possible wear.

In another embodiment, the valves may have modular structure with a plurality of juxtaposed valves. Hereby is achieved a construction which will be easy to mount at the sidewall of a liquid manure distributor, as the valves do not have to be mounted as single units but as modular units. The modules may possibly be produced at a different place from where they are mounted, and they may be outsourced to a sub-contractor who can make these cheaper than at the place where the liquid manure distributor is assembled.

In a preferred embodiment, the liquid manure distributor according to the invention may include an automatised computer control of the actuator by using GPS-data and field maps.

On most large farms, the tractors are presently equipped with a GPS receiver and a computer in which field maps are stored. A computer and a GPS receiver may thus be used for determining an optimal route for driving, where the GPS is used for adjusting the path of the tractor according to the planned route. In such case it would be natural to include an automatic computer control of the actuator, where the spreading width is determined by means of the received GPS position data and the stored field maps. Hereby is achieved rational utilisation of the liquid manure as well as the time to be used for spreading the liquid manure. Besides, the environmental drawbacks connected with excessive fertilisation are obviated.

By using a method according to the invention, the rotation of the cam disc may advantageously be driven by a gear wheel driven by a hydraulic motor, in that the gear wheel is engaging a toothed rim on the guide disc so that by actuating the gear wheel the guide disc is rotated in an optional direction. Hereby is achieved a simple method for rotating the guide disc which only requires power from a single motor.

The method according to the invention may advantageously include steps where the cam means of the valves is displaced between an active position, where the cam means under the action of the cam guide causes the valve body to be displaced between the active and the inactive positions, and an inactive position where the cam means under the action of the cam guide does not cause displacement of the valve body.

Hereby is achieved that the maximum spreading width may be adjusted to the individual field conditions. This of significance if liquid manure is spread on a field where the crops have a certain size, and where a number of wheel tracks have be made already, such as produced e.g. by spraying the fields. It will thus be possible to adapt the spreading width of the liquid manure distributing boom so that it corresponds to the spacing between the spraying tracks.

### Short Description of the Drawing

The invention is described in more detail with reference to the drawing, where:
- Fig. 1: shows a perspective view of a liquid manure distributor according to the invention, illustrated with a guard;
- Fig. 2: shows a side view of a liquid manure distributor according to the invention, illustrated without a guard;
- Fig. 3: shows a second side view of liquid manure distributor according to the invention;
- Fig. 4: shows a detail of Fig. 3;
- Fig. 5: shows a sectional view of a liquid manure distributor according to the invention;
- Fig. 6: shows a view of a liquid manure distributor according to the invention, as seen towards its narrower side;
- Fig. 7: shows a detail of Fig. 3;
- Fig. 8: shows two details of Fig. 7; and
- Fig. 9: shows a schematic view of liquid distributing boom with a liquid manure distributor according to the invention.

### Detailed Description of the Invention

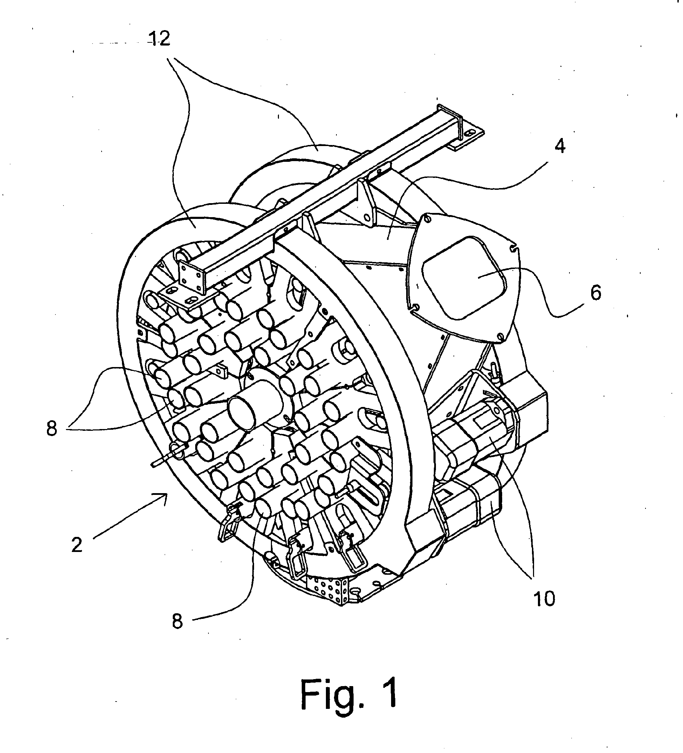

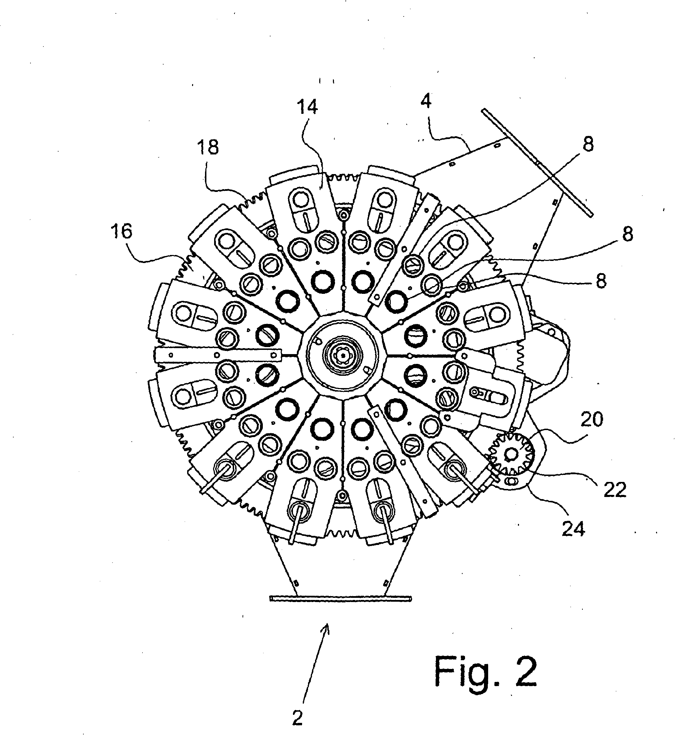

Fig. 1 shows a perspective view of a liquid manure distributor 2 according to the invention. The liquid manure distributor 2 comprises a housing 4 in which is provided an opening 6 for feeding liquid manure to the liquid manure distributor 2. On the Figure appears one sidewall of the liquid manure distributor 2, on which is provided a number of hose connections 8 on which a number of distributing hoses may be fastened. The liquid manure distributor 2 is furthermore equipped with two motors 10 which by activation rotate a guide disc 16 (see Fig. 2) which is provided on each of the sidewalls of the liquid manure distributor 2. The guide discs 16 are screened by a guard 12.

Fig. 2 shows a side view of a liquid manure distributor 2 according to the invention, however without the guard 12. At the sidewall of the liquid manure distributor 2 there is provided a number of gate valves 14. Each gate valve 14 has three discharge apertures with hose connections 8 disposed thereon. The guide disc 16 has a toothed rim 18 along its periphery, the toothed rim 18 engaging the teeth 22 of the gear wheel 20. The gear wheel 20 is driven by a motor 10 (see Fig. 1) which is enclosed in a motor support holder 24.

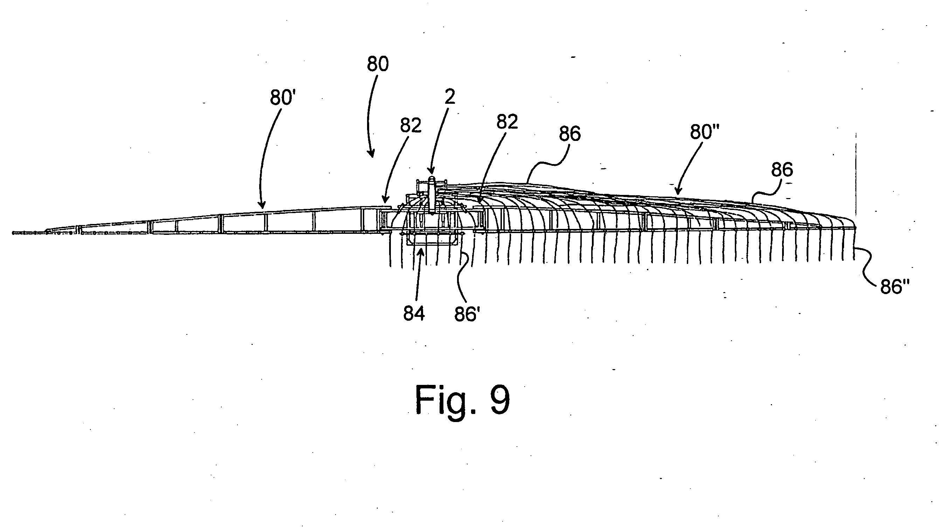

On Fig. 9 appears a schematic view of a liquid manure distributing boom 80 which is intended for disposition on a towed liquid manure tank trailer or a self-propelled liquid manure spreader. The shown construction is formed of two collapsible boom parts 80', 80', which are pivotably suspended about a largely vertical journal 82 on a central frame part 84. The central frame part 84 is intended for fastening on the tank trailer or the liquid manure spreader and is serving to support a liquid manure distributor 2 according to the invention. Alternatively, there may be provided two or more liquid manure distributors. On the hose connections 8 of the liquid manure distributor (see Fig. 1) the distributing hoses 86 are fastened. As it appears from the Figure, there is great difference to the length of a short distributing hose 86' close to the distributor 2 and a long distributing hose 86" farthest away from the liquid manure distributor 2. The distributing hoses 86 are mounted on the boom 80 in any way known to the skilled in the art.

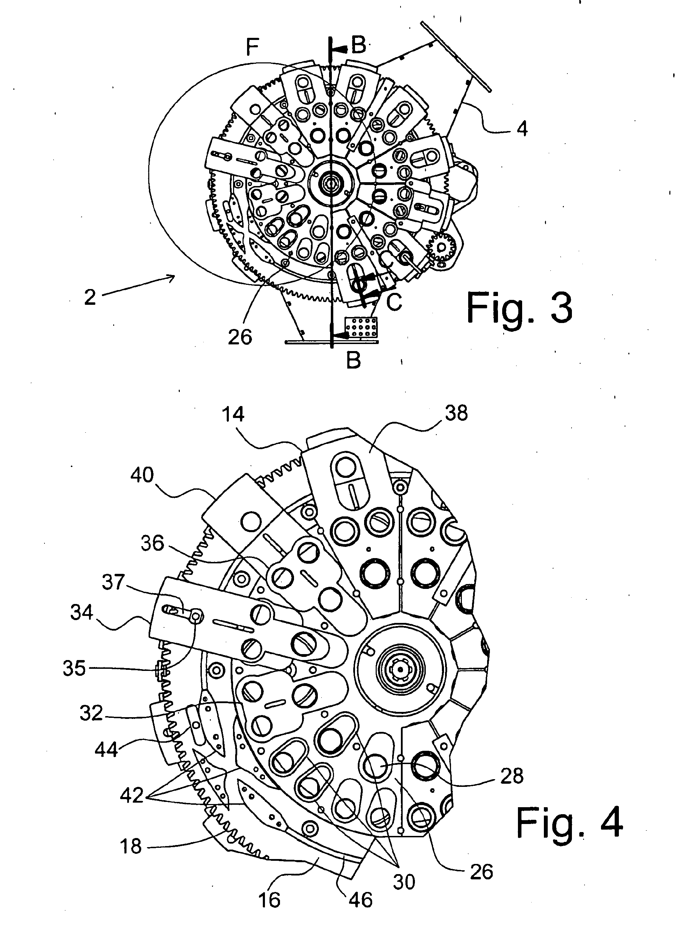

On Fig. 3 appears a side view of a liquid manure distributor 2 according to the invention which layer by layer shows the construction of the valves 14 on a side disc 26 substantially constituting the sidewall of the liquid manure distributor 2. For the sake of clarity, the individual parts of Fig. 3 will be explained in detail with reference to the following Figures.

Fig. 4 shows a detail F of Fig. 3. On the Figure appears a detail of the side disc 26 with a number of holes 28. In connection with the holes 28, there are provided sealing rings 30. In connection with the sealing rings 30, there is provided an inner cover plate 32. Upon the inner cover plate 32, there is provided a valve body 34, and upon the valve body 34 there is provided an outer cover plate 36. The cover plates 32, 36 and the valve body 34 are enclosed by a valve housing 38 which will preferably be made of polyethylene due to the low weight and low friction existing between polyethylene and the valve body 34. In connection with the valve body 34 there is provided a shifting plate 40 which will be explained more closely below. In the valve body 34 there is provided a substantially circular hole 35 communicating with a groove 37.

The guide disc 16 includes a cam guide 42. The cam guide 42 is formed as a number of projections which are fastened with screws on the guide disc 16. By rotating the guide disc 16 relative to the valves 14, the cam means 44 of the valves will be acted on by the cam guide 42, so that, depending on the direction of rotation of the guide disc 16, the cam means 44 will switch from running on one side to the other side of the rail 46. If the cam means 44 is in its active position, this means that the valves 14 are in the active position, i.e. the position where there is free through-flow from the liquid manure distributor 2 and out through the discharge openings in the valve 14, if the cam means is situated at the outer side of the rail 46 (by "outer side" is meant the side of the rail 46 farthest from the centre of the sidewall of the liquid manure distributor 2). If the cam means in its inactive position, however, is situated at the inner side of the rail 46, then the valves 14 will be in the inactive position, i.e. the position where the communication between inlet and discharge openings in the valves 14 is blocked. It will of course be possible to provide an alternative embodiment where this relation is changed, so that the valve is in the active position when the cam means is situated at the outer side of the rail.

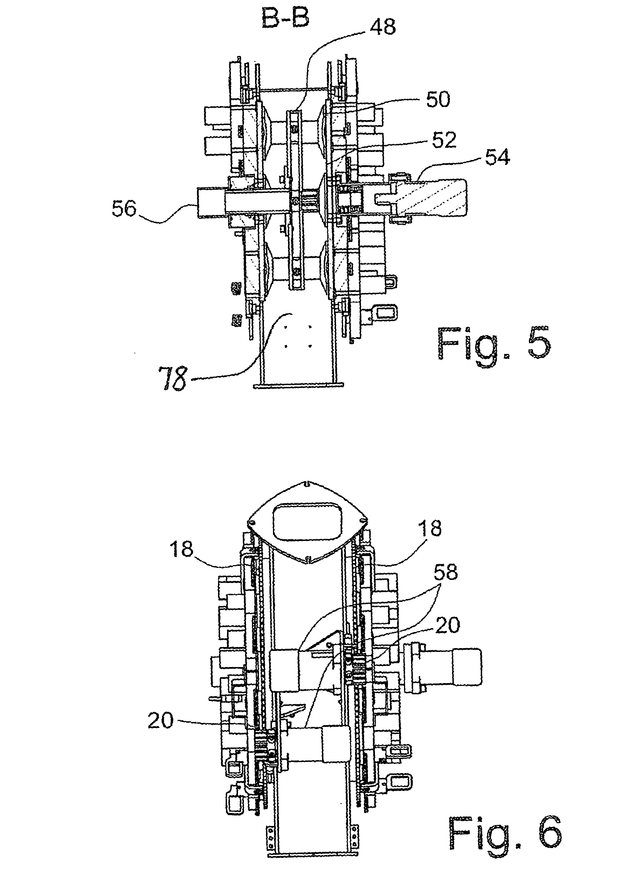

On fig. 5 is seen a cross-section of a liquid manure distributor 2 according to the invention. The cross-section appearing on the Figure is section B-B, and the section is made through the centre of the liquid manure distributor 2 as shown on Fig. 3. On the Figure appears a rotor 48 with a number of cup cutters 50 facing against a cutter plate 52. The cup cutters 50 comminutes possible large continuous parts of organic material before they are conducted out into the distribution hoses 86. The rotor 48 with cup cutters 50 is powered by an oil motor 54. At the other side of the liquid manure distributor 2 there is provided an air intake 56 for ensuring uniform distribution of liquid manure into the distribution hoses 86. The section system may also be used in a traditional distributor where liquid manure is located inside the rotor 48, and the air is situated in the chamber 78.

On Fig. 6 appears a view of a liquid manure distributor 2 according to the invention, as seen towards its narrow side and from the right to the left in Fig. 3. On the Figure appears the two motors 58, each driving the gear wheels 20, the teeth of which engaging the toothed rim 18 on each their guide disc 16. The motors 58 may advantageously be hydraulic oil motors, as these have a high efficiency. Furthermore, an oil motor has the advantage that it can be connected to the hydraulic system of a tractor. There is, however, nothing to hinder the use of other types of motors, such as e.g. an electric motor, or the power transmission on the tractor.

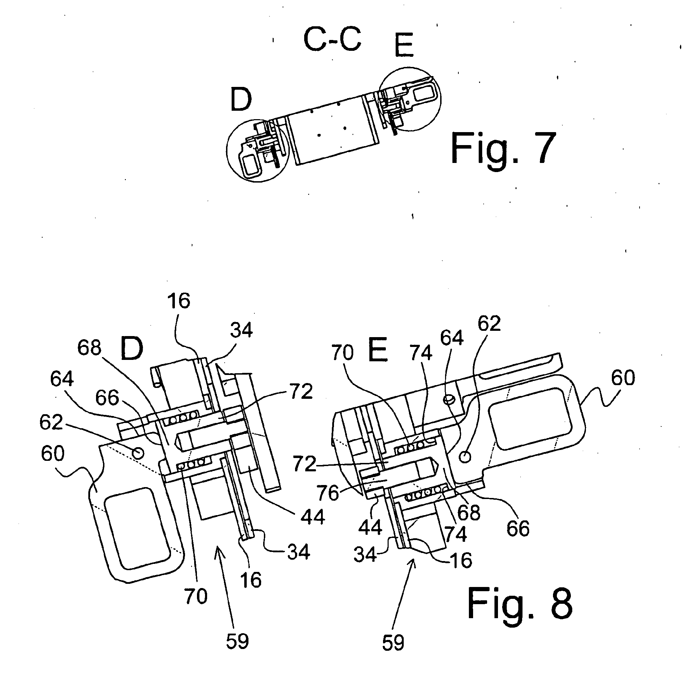

On Fig. 7 appears the detail C-C from Fig. 3.

Fig. 8 shows the details D and E on Fig. 7. The details D and E on Fig. 8 shows the shifting mechanism whereby the cam means 44 of the valves 14 can be switched between the active and the inactive position.

The detail D shows the shifting mechanism 59 in the position where the cam means 44 is in its active position, i.e. the position in which the valve body 34 is connected to the cam means 44 in such a way that the cam means 44 under the action of the cam guide 42 on the guide disc 16 causes the valve body 34 to be displaced between the active and inactive positions.

The shifting mechanism 59 is activated and deactivated by turning the handle 60 through an angle of 90° about the journal 62. As the distance between the journal 62 and the edge 66 on the handle 60 is greater than the distance between the journal 62 and the edge 64 on the handle 60, the handle 60 will, in the position shown on detail D, be pressed down on the abutment 68, whereby the spring 70 is compressed, and the lower end 72 of the abutment 68 is disposed engaged in the hole 35 in the valve body. Hereby is achieved that an action of the cam means 44 from the cam guide 42 on the guide plate 16 causes an action, more specifically a displacement, of the valve body 34.

The detail E shows the shifting mechanism 59 where the valve body is disconnected from the cam means 44, i.e. where the cam means 44 is in the inactive position, where the cam means 44 through action from the cam guide 42 on the guide disc 16 does not cause displacement of the valve body 34. As the distance between the journal 62 and the edge 66 on the handle 60 is greater than the distance between the journal 62 and the edge 64 on the handle 60, the handle 60 will, in the position shown on detail E, not be pressed down on the abutment 68, whereby the spring 70 will expand and press against the edge face 74 of the abutment 68, whereby the lower end 72 of the abutment 68 will disengage the hole 35 in the valve body, whereafter the cam shaft 76 can move freely in the groove 37 (see Fig. 4). Hereby is achieved that the valve body 34 is not actuated (displaced) when the cam means 44 is acted on by the cam guide 42 of the guide disc 16.

## Claims

1. A liquid manure distributor(2) for a liquid manure distributing boom, including a chamber (78) with at least one sidewall with holes (28) for discharging liquid manure from the chamber, a number of valves (14) where each valve is provided with one or more discharge openings, where each discharge opening communicates with a distributing hose (86) on the liquid manure distributing boom (80) and with one or more inlet openings, each inlet opening communicating with corresponding holes in the sidewall, and a valve body (34) displaceable between an active position where the inlet and outlet openings have been brought into mutual communication and an inactive position where the communication between the inlet and outlet openings is blocked, **characterised in that** each valve has a cam means (44) interacting with a cam guide (42) on a guide disc (16) which is rotatable in relation to the valves (14), and which is activated by an actuator (10,20) that may rotate the guide disc (16) in an optional direction, so that the valve body may be displaced between the active position and the inactive position by the action of the cam guide (42) on the cam means (44).

2. Liquid manure distributor according to claim 1, **characterised in that** the actuator includes a hydraulic motor (10) driving a gear wheel (20) engaging a toothed rim (18) on the guide disc (16) so that by actuating the gear wheel this may rotate the guide disc in an optional direction.

3. Liquid manure distributor according to claim 1 or 2, **characterised in that** the valves (14) include a housing (38) of polyethylene with hose connections (8) provided at the discharge openings of the valves (14).

4. Liquid manure distributor according to any preceding claim, **characterised in that** the cam means (44) of the valves have an abutment (68) adapted for engaging a hole (35) in the valve body in an active position of the cam means (44), where the cam means under the action of the cam guide may cause the valve body to be displaced between the active and the inactive positions, and an inactive position of the cam means with the abutment without engaging the hole, and where the cam means (44) under the action of the cam guide (42) does not cause displacement of the valve body (34).

5. Liquid manure distributor according to claim 3 or 4, **characterised in that** each valve housing (38) includes a plurality of valve bodies (34).

6. Liquid manure distributor according to any preceding claim, **characterised in that** the valves have modular structure with a plurality of juxtaposed valves (14).

7. Liquid manure distributor according to any preceding claim, **characterised in that** the actuator is connected with a computer control which is automatised by using GPS data and field maps.

8. A method for controlling spreading width of a liquid manure distributing boom (80), including distributing liquid manure via a liquid manure distributor which includes a chamber (78) with at least one sidewall with holes (28) for discharging liquid manure from the chamber, a number of valves (14) that each are provided with one or more discharge openings, where each discharge opening communicate with a distributing hose (86) on the liquid manure distributing boom and with one or more inlet openings, each inlet opening communicating with corresponding holes (28) in the sidewall, and a valve body (34) displaceable between an active position where the inlet and outlet openings are brought into mutual communication and an inactive position, where the communication between the inlet and outlet openings is blocked, **characterised in that** the method also includes one or more steps, where the valve bodies (34) are displaced between the inactive and the active positions by rotating a guide disc (16) with a cam guide (42) interacting with a cam means (44) on the valves (14), so that the displacement between the active and the inactive positions of the valve body is achieved by the cam guide (42) acting on the cam means (44).

9. Method according to claim 8, **characterised in that** the rotation of the cam disc is driven by a gear wheel (20) driven by a hydraulic motor (10), as the gear wheel is engaging a toothed rim (18) on the guide disc (16) so that by actuating the gear wheel the guide disc is rotated in an optional direction.

10. Method according to claim 8 or 9, **characterised by** including a step where the cam means (44) of the valves (14) is displaced between an active position in engagement with the valve body (34), where the cam means under the action of the cam guide causes the valve means to be displaced between the active and the inactive positions, and inactive position without any engagement with the valve body, where the cam means (44) under the action of the cam guide (42) does not cause displacement of the valve body (34).

## Patentansprüche

1. Jaucheverteiler (2) für einen Jaucheverteilungsausleger, mit einer Kammer (78), die wenigstens eine Seitenwand mit Löchern (28) zum Abgeben von Jauche aus der Kammer besitzt, mehrere Ventilen (14), wovon jedes mit einer oder mit mehreren Abgabeöffnungen versehen ist, wovon jede mit einem Verteilungsschlauch (86) an dem Jaucheverteilungsausleger (80) und mit einer oder mit mehreren Einlassöffnungen in Verbindung steht, wovon jede mit entsprechenden Löchern in der Seitenwand in Verbindung steht, und einem Ventilkörper (34), der zwischen einer aktiven Position, in der zwischen den Einlass- und Auslassöffnungen eine gegenseitige Verbindung besteht, und einer inaktiven Position, in der die Verbindung zwischen den Einlass- und Auslassöffnungen blockiert ist, verlagerbar ist, **dadurch gekennzeichnet, dass** jedes Ventil ein Nockenmittel (44) besitzt, das mit einer Nockenführung (42) an einer Führungsscheibe (16), die in Bezug auf die Ventile (14) drehbar ist, in Wechselwirkung stehen und durch einen Aktor (10, 20) betätigt wird, der die Führungsscheibe (16) in einer optionalen Richtung drehen kann, so dass der Ventilkörper zwischen der aktiven Position und der inaktiven Position durch die Einwirkung der Nockenführung (42) auf das Nockenmittel (44) verlagert werden kann.

2. Jaucheverteiler nach Anspruch 1, **dadurch gekennzeichnet, dass** der Aktor einen Hydraulikmotor (10) aufweist, der ein Zahnrad (20) antreibt, das mit einem Zahnkranz (18) an der Führungsscheibe (16) in Eingriff ist, so dass durch Betätigen des Zahnrades dieses die Führungsscheibe in einer optionalen Richtung dreht.

3. Jaucheverteiler nach Anspruch 1 oder 2, **dadurch gekennzeichnet, dass** die Ventile (14) ein Gehäuse (38) aus Polyethylen aufweisen, das Schlauchverbindungen (8) besitzt, die an den Abgabeöffnungen der Ventile (14) vorgesehen sind.

4. Jaucheverteiler nach einem vorhergehenden Anspruch, **dadurch gekennzeichnet, dass** das Nockenmittel (44) der Ventile einen Anschlag (68) besitzt, der so beschaffen ist, dass er in einer aktiven Position des Nockenmittels (44), in der das Nockenmittel unter der Wirkung der Nockenführung den Ventilkörper zu einer Verlagerung zwischen der aktiven und der inaktiven Position veranlassen kann, mit einem Loch (35) im Ventilkörper in Eingriff ist und in einer inaktiven Position des Nockenmittels nicht mit dem Loch in Eingriff ist, wobei das Nockenmittel (44) unter der Wirkung der Nockenführung (42) dann eine Verlagerung des Ventilkörpers (34) nicht hervorrufen.

5. Jaucheverteiler nach Anspruch 3 oder 4, **dadurch gekennzeichnet, dass** jedes Ventilgehäuse (38) mehrere Ventilkörper (34) enthält.

6. Jaucheverteiler nach einem vorhergehenden Anspruch, **dadurch gekennzeichnet, dass** die Ventile eine modulare Struktur mit mehreren nebeneinander befindlichen Ventilen (14) haben.

7. Jaucheverteiler nach einem vorhergehenden Anspruch, **dadurch gekennzeichnet, dass** der Aktor mit einer Computersteuerung verbunden ist, die unter Verwendung von GPS-Daten und Feldkarten automatisiert ist.

8. Verfahren zum Steuern der Sprühbreite eines Jaucheverteilungsauslegers (80), umfassend das Verteilen von Jauche mittels eines Jaucheverteilers, der versehen ist mit einer Kammer (78), die wenigstens eine Seitenwand mit Löchern (28) zum Abgeben von Jauche aus der Kammer besitzt, einer Anzahl von Ventilen (14), wovon jedes mit einer oder mit mehreren Abgabeöffnungen versehen ist, wovon jede mit einem Verteilungsschlauch (86) an dem Jaucheverteilungsausleger und mit einer oder mit mehreren Einlassöffnungen in Verbindung steht, wovon jede mit entsprechenden Löchern (28) in der Seitenwand in Verbindung steht, und einem Ventilkörper (34), der zwischen einer aktiven Position, in der zwischen den Einlass- und Auslassöffnungen eine gegenseitige Verbindung besteht, und einer inaktiven Position, in der die Verbindung zwischen den Einlass- und Auslassöffnungen blockiert ist, verlagerbar ist, **dadurch gekennzeichnet, dass** das Verfahren außerdem einen oder mehrere Schritte umfasst, in denen die Ventilkörper (34) zwischen der inaktiven und der aktiven Position durch Drehen einer Führungsscheibe (16) mit einer Nockenführung (42), die mit einem Nockenmittel (44) an den Ventilen (14) in Wechselwirkung steht, verlagert werden, so dass die Verlagerung zwischen der aktiven und der inaktiven Position des Ventilkörpers durch die auf das Nockenmittel (44) wirkende Nockenführung (42) erzielt wird.

9. Verfahren nach Anspruch 8, **dadurch gekennzeichnet, dass** die Drehung der Nockenscheibe durch ein Zahnrad (20) bewerkstelligt wird, das durch einen Hydraulikmotor (10) angetrieben wird, wenn das Zahnrad mit einem Zahnkranz (18) an der Führungsscheibe (16) in Eingriff ist, so dass durch Betätigen des Zahnrades die Führungsscheibe in einer optionalen Richtung gedreht wird.

10. Verfahren nach Anspruch 8 oder 9, **dadurch gekennzeichnet, dass** es einen Schritt umfasst, bei dem das Nockenmittel (44) der Ventile (14) zwischen einer aktiven Position, in der es mit dem Ventilkörper (34) in Eingriff ist, wobei das Nockenmittel unter der Wirkung der Nockenführung die Ventilmittel zu einer Verlagerung zwischen der aktiven und der inaktiven Position veranlasst, und einer inaktiven Position ohne Eingriff mit dem Ventilkörper, wobei die Nockenmittel (44) unter der Wirkung der Nockenführung (42) eine Verlagerung des Ventilkörpers (34) nicht hervorrufen, verlagert wird.

## Revendications

1. Distributeur d'engrais liquide (2) pour un bras de distribution d'engrais liquide, comprenant une chambre (78) avec au moins une paroi latérale avec des trous (28) pour décharger l'engrais liquide de la chambre, un certain nombre de soupapes (14) où chaque soupape est dotée d'une ou de plusieurs ouvertures de décharge, où chaque ouverture de décharge communique avec un flexible de distribution (86) sur le bras de distribution d'engrais liquide (80) et avec une ou plusieurs ouvertures d'entrée, chaque ouverture d'entrée communiquant avec les trous correspondants dans la paroi latérale, et un corps de soupape (34) déplaçable entre une position active dans laquelle les ouvertures d'entrée et de sortie ont été amenées en communication mutuelle et une position inactive dans laquelle la communication entre les ouvertures d'entrée et de sortie est bloquée, **caractérisé en ce que** chaque soupape a des moyens formant came (44) interagissant avec un guide de came (42) sur un disque de guidage (16) qui est rotatif par rapport aux soupapes (14) et qui est activé par un actionneur (10, 20) qui peut faire tourner le disque de guidage (16) dans une direction facultative, de sorte que le corps de soupape peut être déplacé entre la position active et la position inactive par l'action du guide de came (42) sur les moyens formant came (44).

2. Distributeur d'engrais liquide selon la revendication 1, **caractérisé en ce que** l'actionneur comprend un moteur hydraulique (10) entraînant une roue dentée (20) mettant en prise un bord denté (18) du disque de guidage (16) de sorte qu'en actionnant la roue dentée, celle-ci peut faire tourner le disque de guidage dans une direction facultative.

3. Distributeur d'engrais liquide selon la revendication 1 ou 2, **caractérisé en ce que** les soupapes (14) comprennent un boîtier (38) en polyéthylène avec des raccordements de flexible (8) prévus au niveau des ouvertures de décharge des soupapes (14).

4. Distributeur d'engrais liquide selon l'une quelconque des revendications précédentes, **caractérisé en ce que** les moyens formant came (44) des soupapes ont une butée (68) adaptée pour mettre en prise un trou (35) dans le corps de soupape dans une position active des moyens formant came (44), où les moyens formant came, sous l'action du guide de came peuvent amener le corps de soupape à être déplacé entre les positions active et inactive, et une position inactive des moyens formant came avec la butée sans mettre en prise le trou, et où les moyens formant came (44) sous l'action du guide de came (42) ne provoquent pas le déplacement du corps de soupape (34).

5. Distributeur d'engrais liquide selon la revendication 3 ou 4, **caractérisé en ce que** chaque boîtier de soupape (38) comprend une pluralité de corps de soupape (34).

6. Distributeur d'engrais liquide selon l'une quelconque des revendications précédentes, **caractérisé en ce que** les soupapes ont une structure modulaire avec une pluralité de soupapes (14) juxtaposées.

7. Distributeur d'engrais liquide selon l'une quelconque des revendications précédentes, **caractérisé en ce que** l'actionneur est raccordé avec une commande d'ordinateur qui est automatisée en utilisant des données GPS et des cartes de champs.

8. Procédé pour contrôler la largeur d'envergure d'un bras de distribution d'engrais liquide (80), comprenant l'étape consistant à distribuer l'engrais liquide via un distributeur d'engrais liquide qui comprend une chambre (78) avec au moins une paroi latérale avec des trous (28) pour décharger l'engrais liquide de la chambre, un certain nombre de soupapes (14) qui sont chacune dotées d'une ou plusieurs ouvertures de décharge, où chaque ouverture de décharge communique avec un flexible de distribution (86) sur le bras de distribution d'engrais liquide et avec une ou plusieurs ouvertures d'entrée, chaque ouverture d'entrée communiquant avec des trous (28) correspondants dans la paroi latérale, et un corps de soupape (34) déplaçable entre une position active dans laquelle les ouvertures d'entrée et de sortie sont amenées en communication mutuelle et une position inactive, dans laquelle la communication entre les ouvertures d'entrée et de sortie est bloquée, **caractérisé en ce que** le procédé comprend également une ou plusieurs étapes, dans lesquelles les corps de soupape (34) sont déplacés entre les positions inactive et active en faisant tourner un disque de guidage (16) avec un guide de came (42) interagissant avec des moyens formant came (44) sur les soupapes (14), de sorte que le déplacement entre les positions active et inactive du corps de soupape est obtenu par le guide de came (42) agissant sur les moyens formant came (44).

9. Procédé selon la revendication 8, **caractérisé en ce que** la rotation du disque de came est entraînée par une roue dentée (20) entraînée par un moteur hydraulique (10), étant donné que la roue dentée met en prise un bord denté (18) sur le disque de guidage (16) de sorte qu'en actionnant la roue dentée, le disque de guidage est entraîné en rotation dans une direction facultative.

10. Procédé selon la revendication 8 ou 9, **caractérisé en qu'**il comprend une étape dans laquelle les moyens formant came (44) des soupapes (14) sont déplacés entre une position active en mise en prise avec le corps de soupape (34), dans laquelle les moyens formant came sous l'action du guide de came amènent les moyens de soupape à être déplacés entre les positions active et inactive, et dans la position inactive sans aucune mise en prise avec le corps de soupape, dans laquelle les moyens formant came (44) sous l'action du guide de came (42) ne provoquent pas le déplacement du corps de soupape (34).
